(19) Europäisches Patentamt
European Patent Office
Office européen des brevets

(11) **EP 3 414 873 B1**

(12) **FASCICULE DE BREVET EUROPEEN**

(45) Date de publication et mention
de la délivrance du brevet:
**25.12.2019 Bulletin 2019/52**

(51) Int Cl.:
*H04L 12/805* (2013.01)          *H04L 12/863* (2013.01)
*H04L 12/807* (2013.01)          *H04L 12/841* (2013.01)
*H04L 12/707* (2013.01)

(21) Numéro de dépôt: **17703132.5**

(22) Date de dépôt: **03.02.2017**

(86) Numéro de dépôt international:
**PCT/EP2017/052333**

(87) Numéro de publication internationale:
**WO 2017/137314 (17.08.2017 Gazette 2017/33)**

(54) **PROCÉDÉ DE TRANSMISSION DE DONNÉES DANS UNE COMMUNICATION MULTI-CHEMIN**

VERFAHREN ZUR DATENÜBERTRAGUNG IN EINER MEHRWEGKOMMUNIKATION

METHOD FOR TRANSMITTING DATA IN A MULTI-PATH COMMUNICATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.02.2016 FR 1650982**

(43) Date de publication de la demande:
**19.12.2018 Bulletin 2018/51**

(73) Titulaire: **Fondation B Com
35510 Cesson Sevigne (FR)**

(72) Inventeurs:
• **GUILLEMIN, Fabrice
22560 Pleumeur Bodou (FR)**
• **HOUZE, Patrice
35700 Rennes (FR)**

(74) Mandataire: **Cabinet Le Guen Maillet
3, impasse de la Vigie
CS 71840
35418 Saint-Malo Cedex (FR)**

(56) Documents cités:
**US-A1- 2013 064 198     US-A1- 2013 286 942
US-A1- 2015 127 843     US-A1- 2015 156 659**

**Description**

La présente invention concerne une communication multi-chemin de données depuis un équipement terminal source vers un équipement terminal destination via un réseau de communication, et plus particulièrement une gestion d'incident de transmission dans le cadre de la communication multi-chemin afin d'éviter des situations de blocage en tête de ligne.

Dans le cadre de transmissions de données depuis un équipement terminal source jusqu'à un équipement terminal destination, il peut exister une pluralité de chemins de communication pour permettre de transmettre lesdites données. Certaines technologies de transmission permettent d'exploiter l'existence d'une telle pluralité de chemins, de manière à notamment augmenter la bande passante mise à disposition de l'équipement terminal source pour transmettre lesdites données à l'équipement terminal destination. En s'appuyant sur le protocole de transport TCP (« Transmission Control Protocol » en anglais), tel que décrit dans le document normatif RFC 793, la technologie MPTCP (« MultiPath TCP » en anglais), tel que décrite dans le document normatif RFC 6824, a ainsi été développée. En utilisant une technologie de communication multi-chemin, l'équipement terminal source établit avec l'équipement terminal destination diverses connexions sur des chemins respectifs, et distribue, entre ces diverses connexions, les données à transmettre.

Le document US 2013/286942 A1 présente un système de coordination et synchronisation de flux de données permettant d'effectuer des télécommunications dans des conditions où l'intensité du signal est faible et faisant appel à une infrastructure multi-chemin.

Le document US 2015/156659 présente un système et une méthode de transmission de flux multiples de données faisant appel à un routeur multi-chemin qui permet de fournir diverses connexions réseau.

Le document US 2105/127843 A1 présente une méthode de gestion de réseau faisant appel à plusieurs routes ou chemins par lesquels sont délivrées des données de manière simultanée.

Le document US 2013/064198 A1 présente une méthode de communication sans-fil faisant appel à un protocole de transport multi-chemin MTP (« multi-path transport protocol » en anglais).

Etant donné que les connexions sont établies sur des chemins distincts, les données qui transitent par ces connexions subissent des contraintes de transmission différentes d'une connexion à l'autre. Cela est d'autant plus vrai lorsque les connexions reposent sur des liens physiques hétérogènes (*e.g.* une connexion passe par un réseau communication de type Wi-Fi (marque déposée), alors qu'une autre connexion passe par un réseau de communication mobile selon une technologie promue par l'organisation 3GPP (« Third Generation Partnership Project » en anglais), comme par exemple GPRS (« General Paquet Radio Service » en anglais), UMTS (« Universal Mobile Telecommunications System » en anglais) ou LTE (« Long-Term Evolution » en anglais). Des situations de blocage en tête de ligne (« head-of-line blocking » en anglais) peuvent alors survenir, ce qui est particulièrement dommageable dans le cadre d'applications temps-réel qui imposent une contrainte temporelle de disponibilité des données en réception. En effet, si une perte de données survient sur un chemin A qui est utilisé dans le cadre d'une communication multi-chemin et qui induit une latence moyenne de transmission de bout-en-bout bien plus élevée que sur au moins un autre chemin B utilisé dans le cadre de ladite communication multi-chemin, alors cette différence significative de latences de transmission entre les chemins A et B entraîne d'importants dé-séquencements de données au niveau de l'équipement terminal destination. La perte de données implique que de nombreuses données reçues par l'équipement terminal destination sont mises en file d'attente de réception, le temps que l'équipement terminal destination reçoive effectivement les données perdues grâce à un mécanisme de retransmission activé par l'équipement terminal source pour le chemin A, et un phénomène de blocage en tête de ligne apparaît alors. Des blocages en tête de ligne peuvent apparaître rien que par la différence significative de latences de transmission entre les chemins A et B, mais la perte de données amplifie le phénomène lorsque ladite perte de donnée survient sur le chemin A qui présente la latence moyenne de transmission de bout-en-bout la plus élevée.

Il est souhaitable de pallier ces inconvénients de l'état de la technique. Il est plus particulièrement souhaitable de limiter, voire d'éviter, que des situations de blocage en tête de ligne surviennent dans des communications multi-chemin, notamment lorsque des différences significatives de latences de transmission existent entre les différents chemins empruntés par lesdites communications multi-chemin. Il est aussi souhaitable de pouvoir utiliser, dans le cadre de connexions établies pour ces communications multi-chemin, des protocoles de transmission en mode orienté connexion qui soient standard, tels que TCP, qui sont d'ores et déjà bien supportés par les équipements d'infrastructures réseau par lesquels passent les chemins de communication de la communication multi-chemin.

La présente invention concerne un procédé de transmission de données dans le cadre d'une communication multi-chemin depuis un équipement terminal source vers un équipement terminal destination. Le procédé est tel qu'il comporte les étapes suivantes : établir, sur au moins un chemin de la communication multi-chemin, une pluralité de connexions depuis l'équipement terminal source vers l'équipement terminal destination ; pour chaque chemin sur lequel une pluralité de connexions a été établie, sélectionner pour la rendre active au moins une connexion parmi ladite pluralité de connexions, les autres connexions établies étant mises en réserve ; et répartir les données entre les connexions sélectionnées, dites connexions actives, selon au moins une règle de répartition prédéfinie, et transmettre les données réparties. Sur détection d'un incident de transmission via une connexion active sur un chemin sur lequel une dite pluralité de connexions a été établie, le procédé est en outre tel qu'il comporte les étapes suivantes : fermer ladite connexion active, et rendre active une connexion qui avait été mise en réserve sur ledit chemin. Ainsi, en fermant la connexion active où l'incident de transmission a été détecté, le procédé coupe court aux retransmissions de données via cette connexion, et remet à disposition, pour la répartition de données entre les chemins, une nouvelle connexion (qui avait été mise en réserve sur ledit chemin). La mise en réserve d'au moins une connexion permet d'assurer que la communication multi-chemin bénéficie sans tarder d'une nouvelle connexion sur le chemin où l'incident de transmission a été détecté. La perte de la connexion défaillante est ainsi compensée par un ensemble de connexions actives plus performantes, ce qui permet de limiter, voire d'éviter, des situations de blocage en tête de ligne.

Selon un mode de réalisation particulier, une pluralité de connexions est établie depuis l'équipement terminal source vers l'équipement terminal destination pour chaque chemin de la communication multi-chemin. Ainsi, la communication multi-chemin est plus robuste aux incidents de transmission, tels que des pertes de paquet de données, qui peuvent survenir sur n'importe lequel desdits chemins.

Selon un mode de réalisation particulier, après avoir établi chaque dite pluralité de connexions, une unique connexion est sélectionnée pour la rendre active pour chaque chemin sur lequel une dite pluralité de connexions a été établie. Ainsi, la répartition des données entre les différents chemins permet d'implémenter une politique d'équité (« fairness » en anglais) de charge entre lesdits chemins.

Selon un mode de réalisation particulier, le procédé implémentant un mécanisme de gestion de congestion reposant sur un protocole à fenêtre de congestion pour chaque connexion active, le procédé initialise la fenêtre de congestion de la connexion, qui a été rendue active suite à l'incident de transmission, selon un mécanisme de démarrage lent. Ainsi, le procédé a un comportement prudent et respectueux (« friendly » en anglais), ce qui limite les risques de perte de données via la connexion qui a été rendue active suite à l'incident de transmission, et ce qui permet une recherche graduelle d'une taille de fenêtre de congestion appropriée.

Selon un mode de réalisation particulier, le procédé implémentant un mécanisme de gestion de congestion reposant sur un protocole à fenêtre de congestion pour chaque connexion active, le procédé initialise la fenêtre de congestion de la connexion, qui a été rendue active suite à l'incident de transmission, à une valeur maximale de taille autorisée. Ainsi, le procédé peut être plus efficace, puisqu'il ne perd pas de temps à monter en puissance lorsque la répartition de données va faire que la connexion qui a été rendue active suite à l'incident de transmission est effectivement utilisée.

Selon un mode de réalisation particulier, le procédé implémentant un mécanisme de gestion de congestion reposant sur un protocole à fenêtre de congestion pour chaque connexion active, le procédé initialise la fenêtre de congestion de la connexion, qui a été rendue active suite à l'incident de transmission, à une valeur de taille égale à une valeur de taille que la fenêtre de congestion de la connexion où l'incident a été détecté avait avant d'être fermée. Ainsi, le procédé exploite la connaissance *a priori* des caractéristiques actuelles du chemin en question.

Selon un mode de réalisation particulier, après avoir fermé la connexion où l'incident a été détecté, le procédé établit une nouvelle connexion sur le chemin sur lequel avait été établie la connexion fermée, la nouvelle connexion étant mise en réserve. Ainsi, le procédé dispose de suffisamment de connexions en réserve pour absorber les incidents de transmission.

Selon un mode de réalisation particulier, le procédé établit, pour chaque dite pluralité de connexions, une quantité Q de connexions telle que :

$$Q = \left\lceil 1 + \frac{\max(t_1, t_2)}{RTT} \right\rceil$$

où $\lceil x \rceil$ représente la partie entière par excès de $x$, $t_1$ représente un temps nécessaire pour établir une connexion entre l'équipement terminal source et l'équipement terminal destination, $t_2$ représente un temps nécessaire pour fermer une connexion entre l'équipement terminal source et l'équipement terminal destination, et $RTT$ représente un temps moyen d'aller-retour le long du chemin sur lequel ladite pluralité de connexions a été établie. Ainsi, le procédé dispose toujours de suffisamment de connexions en réserve pour absorber les incidents de transmission, car le procédé prend en compte les temps de fermeture et d'établissement de connexion, ces temps étant liés au temps moyen d'aller-retour le long du chemin en question.

Selon un mode de réalisation particulier, le procédé extrait des données présentes dans une file d'attente d'émission associée à la connexion où l'incident a été détecté, et redistribue les données extraites entre les connexions actives de la communication multi-chemin selon au moins une règle de redistribution prédéterminée. Ainsi, l'absorption de l'incident de transmission en termes de latence de transmission est améliorée.

Selon un mode de réalisation particulier, le procédé comprend un classement des connexions actives en fonction de latences moyennes de transmission que lesdites connexions actives impliquent respectivement depuis l'équipement terminal source jusqu'au dispositif terminal destination, et redistribue lesdites données entre les connexions actives au moins en fonction dudit classement. Ainsi, l'absorption de l'incident de transmission en termes de latence de transmission est encore améliorée.

Selon un mode de réalisation particulier, le procédé effectue en outre une étape préalable de regroupement des données à transmettre en unités de données de taille inférieure à une valeur minimale des longueurs maximum de segment négociées pour les chemins de la communication multi-chemin, et le procédé répartit les unités de données entre les connexions actives. Ainsi, la redistribution des données suite à la fermeture de la connexion où l'incident de transmission a été détecté est facilitée, car il n'y a pas besoin d'effectuer de nouveaux regroupements de données pour s'adapter aux capacités différentes des chemins sur lesquels lesdites connexions actives ont été établies.

Selon un mode de réalisation particulier, la redistribution comprend, pour au moins une file d'attente d'émission associée à une connexion active : une identification, parmi les données de ladite file d'attente, des données transmises au dispositif terminal destination mais non acquittées et des données en attente de transmission au dispositif terminal destination ; et une insertion des données à redistribuer, parmi lesdites données en attente de transmission. Ainsi, l'absorption de l'incident de transmission en termes de latence de transmission est encore améliorée.

Selon un mode de réalisation particulier, suite à l'extraction des données de la file d'attente de la connexion où l'incident a été détecté, la redistribution de données comprend une insertion des données extraites en tête d'une file d'attente amont, en vue de leur répartition entre les connexions actives selon ladite ou lesdites règle(s) de répartition prédéfinie. Ainsi, l'application de ladite ou lesdites règle(s) de répartition prédéfinie(s) est garantie.

Selon un mode de réalisation particulier, le procédé place les données extraites dans une mémoire tampon de délestage, et le procédé comporte en outre les étapes suivantes : sélectionner au moins une connexion active pour redistribuer les données stockées dans la mémoire tampon de délestage ; fermer chaque connexion active sélectionnée ; rendre active une connexion qui avait été mise en réserve sur chaque chemin pour lequel une connexion active sélectionnée a été fermée ; et extraire des données présentes dans une file d'attente d'émission associée à chaque connexion active sélectionnée qui a été fermée, et les placer dans la mémoire tampon de délestage, en vue de leur redistribution. Ainsi, la redistribution des données suite à la fermeture de la connexion où l'incident de transmission a été détecté est facilitée, car il n'y pas besoin de se préoccuper de renuméroter (séquencement) des données déjà présentes en file d'attente d'émission, tout en permettant d'implémenter une politique d'équité de charge entre lesdits chemins.

Selon un mode de réalisation particulier, le procédé extrait des données présentes dans une file d'attente d'émission associée à la connexion où l'incident a été détecté, et utilise pour transmettre lesdites données une connexion de substitution qui avait été mise en réserve sur un autre chemin que celui où avait été établie la connexion où l'incident a été détecté. Ainsi, la transmission des données qui étaient présentes dans la file d'attente d'émission associée à la connexion où l'incident a été détecté sont transmises de manière simple, sur une connexion de substitution, dont la file d'attente d'émission ne contient aucune autre donnée, en limitant donc les risques qu'un nouvel incident de transmission ne survienne.

Selon un mode de réalisation particulier, lorsque la connexion qui avait été mise en réserve est rendue active suite à l'incident de transmission, le procédé effectue une phase de test vis-à-vis de ladite connexion, dans laquelle le procédé transmet des données à la fois via ladite connexion et via au moins une autre connexion active de sorte à créer de la redondance de données, et ce jusqu'à ce que ladite connexion rendue active montre une latence de transmission inférieure à un seuil prédéfini. Ainsi, la redistribution des données suite à la fermeture de la connexion où l'incident de transmission a été détecté est facilitée, car il n'y pas besoin de se préoccuper de renuméroter (séquencement) des données déjà présentes en file d'attente d'émission.

L'invention concerne également un équipement configuré pour permettre à un équipement terminal source d'effectuer une transmission de données dans le cadre d'une communication multi-chemin depuis l'équipement terminal source vers un dispositif terminal destination. Ledit équipement est tel qu'il comporte une machine de calcul configurée pour : établir, sur au moins un chemin de la communication multi-chemin, une pluralité de connexions avec l'équipement terminal destination ; pour chaque chemin sur lequel une pluralité de connexions a été établie, sélectionner pour la rendre active au moins une connexion parmi ladite pluralité de connexions, les autres connexions établies étant mises en réserve ; et répartir les données entre les connexions sélectionnées, dites connexions actives, selon au moins une règle de répartition prédéfinie, et transmettre les données réparties. De plus, la machine de calcul est configurée pour, sur détection d'un incident de transmission via une connexion active sur un chemin sur lequel une dite pluralité de connexions a été établie, fermer ladite connexion active, et rendre active une connexion qui avait été mise en réserve sur ledit chemin.

L'invention concerne également un programme d'ordinateur comportant des instructions pour mettre en œuvre le procédé mentionné ci-dessus dans l'un quelconque de ses modes de réalisation, lorsque ledit programme d'ordinateur est exécuté par un processeur. L'invention concerne également un support de stockage d'informations stockant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1A illustre schématiquement un premier exemple de système de communication dans lequel l'invention peut être implémentée ;
- la Fig. 1B illustre schématiquement un second exemple de système de communication dans lequel l'invention peut être implémentée ;
- la Fig. 1C illustre schématiquement un troisième exemple de système de communication dans lequel l'invention peut être implémentée ;
- la Fig. 2 illustre schématiquement un exemple d'architecture matérielle d'un équipement terminal source ;
- la Fig. 3 illustre schématiquement un algorithme, implémenté par l'équipement terminal source, d'initialisation d'une communication multi-chemin avec un équipement terminal destination ;
- la Fig. 4 illustre schématiquement une configuration de système de communication résultant d'une exécution de l'algorithme de la Fig. 3 ;
- la Fig. 5 illustre schématiquement un algorithme, implémenté par l'équipement terminal source, de gestion d'incident de transmission de données dans le cadre de la communication multi-chemin avec l'équipement terminal destination ; et
- la Fig. 6 illustre schématiquement une configuration de l'équipement terminal source, dans un mode de réalisation particulier d'implémentation de l'invention.

Pour éviter que surviennent des situations de blocage en tête de ligne dans le cadre d'une communication multi-chemin depuis un équipement terminal source jusqu'à un équipement terminal destination, il est proposé un procédé établissant, sur au moins un chemin de la communication multi-chemin, une pluralité de connexions depuis l'équipement terminal source vers l'équipement terminal destination. Puis, pour chaque chemin sur lequel une dite pluralité de connexions a été établie, au moins une connexion est sélectionnée, parmi ladite pluralité de connexions, pour la rendre active, et les autres connexions établies sont mises en réserve. Les données sont alors réparties via les connexions sélectionnées, dites connexions actives, selon au moins une règle de répartition prédéfinie en vue de leur transmission dans le cadre de la communication multi-chemin. Puis, sur détection d'un incident de transmission via une connexion active sur un chemin sur lequel une dite pluralité de connexions a été établie, le procédé ferme ladite connexion active, et rend active une connexion qui avait été mise en réserve sur ledit chemin. Il est aussi proposé un équipement configuré pour permettre la mise en œuvre du procédé.

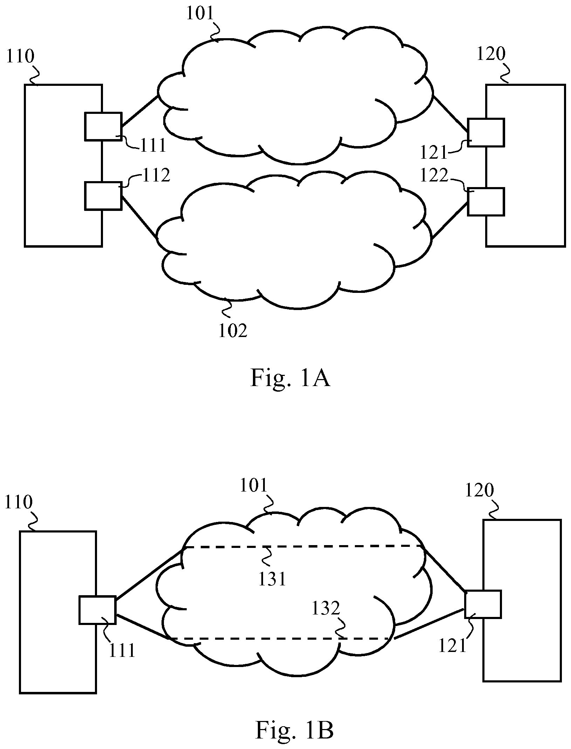

Les Figs. 1A à 1C décrites ci-après montrent différents exemples de système de communication dans lesquels une pluralité de chemins de communication existent entre deux équipements terminaux, et donc dans lesquels l'invention peut être implémentée.

La Fig. 1A illustre schématiquement un premier exemple de système de communication dans lequel l'invention peut être implémentée. Dans ce premier exemple, le système de communication comporte un équipement terminal source 110 et un équipement terminal destination 120. L'emploi du terme *équipement* signifie que l'équipement terminal source 110 et l'équipement terminal destination 120 peuvent respectivement prendre la forme d'un unique dispositif ou d'un ensemble de dispositifs interconnectés pour réaliser les fonctions et opérations à la charge dudit équipement. Par la suite, il est considéré à titre illustratif, que l'équipement terminal source 110 et l'équipement terminal destination 120 sont respectivement des dispositifs uniques.

Le dispositif terminal source 110 comporte une première interface 111 configurée pour permettre au dispositif terminal source 110 de communiquer via un premier réseau de communication 101, ainsi qu'une seconde interface 112 configurée pour permettre au dispositif terminal source 110 de communiquer via un second réseau de communication 102. De manière analogue, le dispositif terminal destination 120 comporte une première interface 121 configurée pour permettre au dispositif terminal destination 120 de communiquer via le premier réseau de communication 101, ainsi qu'une seconde interface 122 configurée pour permettre au dispositif terminal destination 120 de communiquer via le second réseau de communication 102. Par exemple, le premier réseau de communication 101 est un réseau Wi-Fi (marque déposée), tel que décrit dans la famille de standards IEEE 802.11, et le second réseau de communication 102 est un réseau Ethernet (marque déposée), tel que décrit dans la famille de standards IEEE 802.3. Dans ce premier exemple, il existe au moins un chemin de communication via le premier réseau de communication 101, et au moins un autre chemin de communication via le second réseau de communication 102, pour permettre au dispositif terminal source 110 de transmettre des données au dispositif terminal destination 120 dans le cadre d'une communication multi-chemin.

La Fig. 1B illustre schématiquement un second exemple de système de communication dans lequel l'invention peut être implémentée. Dans ce second exemple, le dispositif terminal source 110 et le dispositif terminal destination 120 sont interconnectés uniquement par le premier réseau de communication 101, dans lequel il existe au moins deux chemins de communication 131, 132, pour permettre au dispositif terminal source 110 de transmettre des données au dispositif terminal destination 120 dans le cadre d'une communication multi-chemin. Par exemple, le premier réseau de communication 101 est un réseau maillé à commutation de paquets ou de circuits

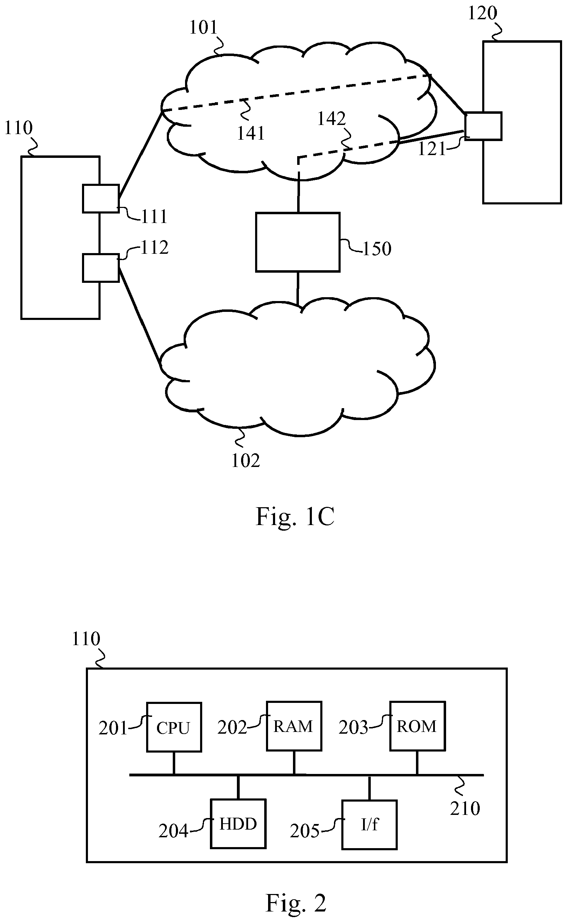

La Fig. 1C illustre schématiquement un troisième exemple de système de communication dans lequel l'invention peut être implémentée. Dans ce troisième exemple, le dispositif terminal source 110 est connecté au premier réseau de communication 101 et au second réseau de communication 102 de la même manière que dans le premier exemple représenté sur la Fig. 1A, et le dispositif terminal destination 120 est connecté au premier réseau de communication 101 de la même manière que dans le second exemple représenté sur la Fig. 1B. Un dispositif passerelle 150 étant configuré pour interconnecter les premier 101 et second 102 réseaux de communication, il existe au moins un chemin de communication via le premier réseau de communication 101, et au moins un autre chemin de communication via le dispositif passerelle 150, pour permettre au dispositif terminal source 110 de transmettre des données au dispositif terminal destination 120 dans le cadre d'une communication multi-chemin. Par exemple, le premier réseau de communication 101 est l'Internet accédé par le dispositif terminal source 110 via un point d'accès Wi-Fi (marque déposée), et le second réseau de communication 102 est un réseau UMTS ou LTE (« Long-Terme Evolution » en anglais).

La **Fig. 2** illustre schématiquement un exemple d'architecture matérielle du dispositif terminal source 110. Le dispositif terminal destination 120 peut être agencé selon le même exemple d'architecture matérielle.

Selon l'exemple de la Fig. 2, le dispositif terminal source 110 comprend, reliés par un bus de communication 210 : un processeur ou CPU (« Central Processing Unit» en anglais) 201 ; une mémoire vive RAM (« Random Access Memory » en anglais) 202 ; une mémoire morte ROM (« Read Only Memory » en anglais) 203 ; une unité de stockage 204 ou un lecteur de support de stockage, tel qu'un lecteur de cartes SD (« Secure Digital » en anglais) ou un disque dur HDD (« Hard Disk Drive » en anglais) ; au moins une interface I/f 205, comme par exemple les interfaces 111 et 112 mentionnées en relation avec les Figs. 1A et 1C, configurée pour permettre au dispositif terminal source 110 de communiquer via au moins un réseau de communication respectif.

Le processeur 201 est capable d'exécuter des instructions chargées dans la mémoire RAM 202 à partir de la mémoire ROM 203, d'une mémoire externe (non représentée), d'un support de stockage (tel qu'une carte SD), ou d'un réseau de communication (potentiellement autre que les premier 101 et second 102 réseaux de communication). Lorsque le dispositif terminal source 110 est mis sous tension, le processeur 201 est capable de lire de la mémoire RAM 202 des instructions et de les exécuter. Ces instructions forment un programme d'ordinateur causant l'implémentation, par le processeur 201, de tout ou partie des algorithmes et étapes décrits ci-après.

Tout ou partie des algorithmes et étapes décrits ci-après peut être implémenté sous forme logicielle par exécution d'un ensemble d'instructions par une machine programmable ou une machine de calcul, par exemple un processeur, un DSP (« Digital Signal Processor » en anglais) ou un microcontrôleur, ou être implémenté sous forme matérielle par une machine de calcul ou un composant dédié, par exemple un FPGA (« Field-Programmable Gate Array » en anglais) ou un ASIC (« Application-Specific Integrated Circuit » en anglais).

Dans un mode de réalisation en variante, l'invention concerne une machine de calcul, ou un processeur, ou un composant dédié, comme décrit ci-dessus, configuré(e) pour causer l'implémentation, par le dispositif terminal source 110, de tout ou partie des algorithmes et étapes décrits ci-après.

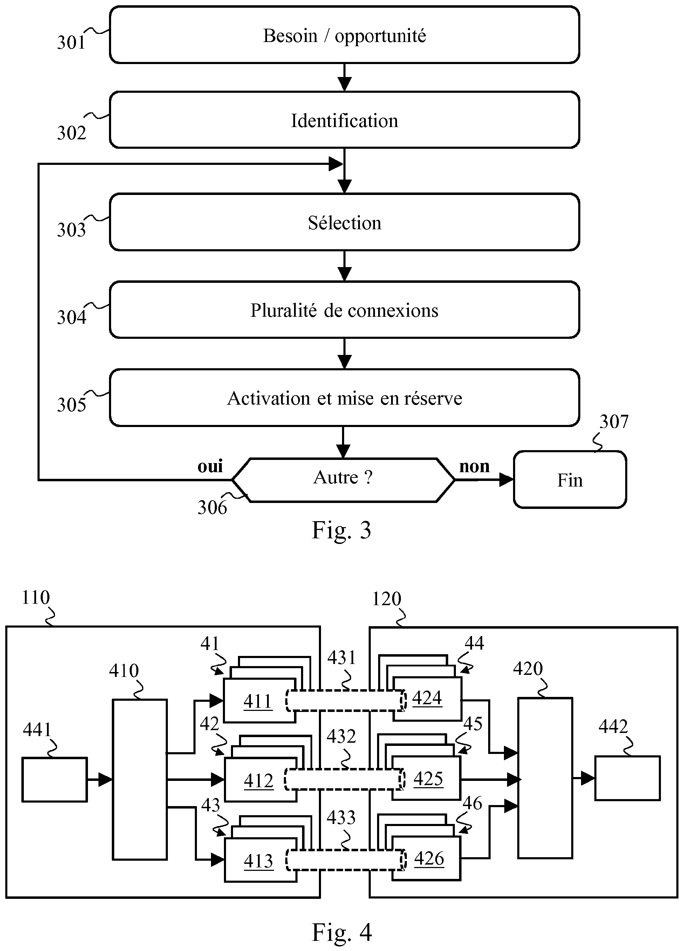

La **Fig. 3** illustre schématiquement un algorithme, implémenté par le dispositif terminal source 110, d'initialisation d'une communication multi-chemin avec le dispositif terminal destination 120.

Dans une étape 301, le dispositif terminal source 110 détecte un besoin ou une opportunité d'établissement d'une communication multi-chemin avec le dispositif terminal destination 120. Le dispositif terminal source 110 détecte devoir transmettre des données au dispositif terminal destination 120 et a connaissance que plusieurs chemins permettent de joindre le dispositif terminal destination 120. En d'autres termes, le dispositif terminal source 110 détecte avoir l'opportunité d'effectuer une communication multi-chemin avec le dispositif terminal destination 120.

Dans une étape 302 suivante, le dispositif terminal source 110 identifie chacun des chemins de communication sur lesquels doit reposer la communication multi-chemin.

Dans une étape 303 suivante, le dispositif terminal source 110 sélectionne un chemin de communication parmi les chemins de communication identifiés à l'étape 302, par exemple de manière arbitraire. Des règles prédéfinies de sélection peuvent être appliquées pour que le dispositif terminal source 110 puisse décider quel chemin de communication sélectionner de manière préférentielle parmi les chemins de communication identifiés à l'étape 302.

Dans une étape 304 suivante, le dispositif terminal source 110 établit une pluralité de connexions avec le dispositif terminal destination 120 via le chemin de communication sélectionné à l'étape 303. Lors de l'établissement de chaque connexion, un protocole d'initialisation est mis en place avant de pouvoir transmettre des données utiles. Ce protocole d'initialisation consiste typiquement en une poignée de main en trois étapes (« three-way handshake » en anglais) dont l'objectif est de partager des numéros de séquence utilisés, par incréments successifs au fil des transmissions de données, pour assurer que les données sont délivrées à une application réceptrice du dispositif terminal destination 120 selon la même séquence que celle selon laquelle lesdites données ont été fournies par une application émettrice dudit dispositif terminal source 110. Chacune desdites connexions est préférentiellement établie conformément au protocole TCP. D'autres protocoles peuvent toutefois être utilisés, dès que ces protocoles offrent des possibilités d'établir des connexions entre le dispositif terminal 110 et le dispositif terminal destination 120, ainsi que des mécanismes de contrôle de flux et de contrôle de congestion.

Dans un mode de réalisation particulier, le dispositif terminal source 110 établit une quantité Q de telles connexions qui a été fixée par défaut ; par exemple, deux connexions sont ainsi établies à l'étape 304 pour le chemin de communication sélectionné à l'étape 303.

Dans un autre mode de réalisation particulier, le dispositif terminal 110 établit une quantité Q de telles connexions, qui a été fixée de la manière suivante :

$$Q = \left\lceil 1 + \frac{\max(t_1, t_2)}{RTT} \right\rceil$$

où $\lceil x \rceil$ représente la partie entière par excès (« ceiling » en anglais) de $x$, $t_1$ représente un temps nécessaire pour établir une connexion entre le dispositif terminal source 110 et le dispositif terminal destination 120, $t_2$ représente un temps nécessaire pour fermer une connexion entre le dispositif terminal source 110 et le dispositif terminal destination 120, et $RTT$ représente un temps moyen d'aller-retour le long du chemin de communication sélectionné à l'étape 303 (c'est-à-dire en substance le double de la latence de transmission depuis le dispositif terminal 110 jusqu'au dispositif terminal destination 120 via le chemin de communication sélectionné à l'étape 303). Cela permet réduire un temps nécessaire pour activer ultérieurement une connexion devant venir en remplacement d'une autre connexion, de ladite pluralité de connexions, qui a dû être fermée suite à un incident de transmission.

La valeur du temps moyen d'aller-retour le long du chemin de communication sélectionné à l'étape 303 est obtenue par statistiques au fur et à mesure que des transmissions avec acquittement sont effectuées le long du chemin de communication sélectionné à l'étape 303. Si aucune donnée statistique n'est disponible au moment de l'établissement de la connexion multi-chemin, le dispositif terminal source 110 établit une quantité Q de telles connexions qui a été fixée par défaut, et ajuste ultérieurement la quantité Q de ces connexions lorsque des données statistiques relatives au chemin de communication sélectionné à l'étape 303 permettent au dispositif terminal source 110 de déterminer la valeur du temps moyen d'aller-retour le long dudit chemin de communication.

Dans une étape 305 suivante, le dispositif terminal 110 sélectionne, pour la rendre active, au moins une connexion parmi la pluralité de connexions qui ont été établies à l'étape 304 pour le chemin de communication sélectionné à l'étape 303. Sélectionner une connexion pour rendre active ladite connexion revient à configurer la connexion, et les mécanismes qui lui sont inhérents tels que le contrôle de flux et le contrôle de congestion, pour rendre ladite connexion utilisable pour transmettre des données. Chaque connexion active est ainsi identifiée comme étant utilisable pour transmettre des données par application d'au moins une règle de répartition prédéfinie. Le dispositif terminal 110 met en réserve chaque autre connexion de ladite pluralité de connexions qui ont été établies pour le chemin de communication sélectionné à l'étape 303. Chaque connexion mise en réserve est ainsi identifiée comme n'étant pas prise en compte dans l'application de la règle (ou des règles) de répartition prédéfinie(s).

Préférentiellement, dans l'étape 305, le dispositif terminal 110 sélectionne, pour la rendre active, une unique connexion parmi la pluralité de connexions qui ont été établies à l'étape 304 pour le chemin de communication sélectionné à l'étape 303, chaque autre connexion de ladite pluralité de connexions qui ont été établies pour le chemin de communication sélectionné à l'étape 303 étant mise en réserve.

Dans une étape 306 suivante, le dispositif terminal 110 vérifie si l'établissement de la communication multi-chemin doit encore prendre en compte au moins un autre chemin de communication parmi les chemins de communication identifiés à l'étape 302. Si tel est le cas, l'étape 303 est réitéré en sélectionnant un tel autre chemin de communication parmi les chemins de communication identifiés à l'étape 302 ; sinon, une étape 307 est effectuée, dans laquelle il est mis à l'algorithme de la Fig. 3.

L'algorithme de la Fig. 3 montre qu'une pluralité de connexions est ainsi préférentiellement établie pour chacun des chemins de communication sur lesquels doit reposer la communication multi-chemin. Il est toutefois possible de n'établir une telle pluralité de connexions que pour une quantité Q' de chemins de communication parmi une quantité N de chemins de communication sur lesquels doit reposer la communication multi-chemin, avec $0 < Q' < N$. Par exemple, $Q' = 1$. Il est notamment possible de n'établir une telle pluralité de connexions que pour chaque chemin de communication présentant une latence de transmission moyenne supérieure à un seuil qui a été prédéterminé en fonction de la latence de transmission moyenne la plus faible parmi lesdits chemins de communication sur lesquels doit reposer la communication multi-chemin, chaque autre chemin ne disposant alors que d'une unique connexion (le caractère multi-chemin de la communication étant ainsi conservé). Par exemple, en prenant l'exemple de la Fig. 1C dans lequel le premier réseau de communication 101 est l'Internet accédé via un point d'accès Wi-Fi (marque déposée) et le second réseau de communication 102 est un réseau UMTS ou LTE, il est notamment possible de n'établir une telle pluralité de connexions que pour le chemin passant par le second réseau de communication 102 et une unique connexion pour le chemin passant par le premier réseau de communication 101.

La **Fig. 4** illustre schématiquement une configuration de système de communication, qui résulte d'une exécution de l'algorithme de la Fig. 3 de sorte à établir une communication multi-chemin depuis le dispositif terminal source 110 vers le dispositif terminal destination 120 en s'appuyant sur une pluralité de chemins de communication 431, 432, 433. De manière illustrative, la configuration de la Fig. 4 considère qu'une pluralité de connexions a été établie pour chaque chemin de la communication multi-chemin.

Selon la configuration de la Fig. 4, le dispositif terminal source 110 comporte une file d'attente amont 441 dédiée à la communication multi-chemin établie avec le dispositif terminal destination 120. La file d'attente amont 441 est configurée pour recevoir et stocker temporairement une séquence de données, issues de l'application émettrice (non représentée) dudit dispositif terminal source 110, en vue de leur transmission vers le dispositif terminal destination 120 via ladite communication multi-chemin. D'une manière similaire, le dispositif terminal destination 120 comporte une file d'attente aval 442 dédiée à la communication multi-chemin établie avec le dispositif terminal source 110. La file d'attente aval 442 est configurée pour stocker les données reçues en provenance du dispositif terminal source 110, en vue de leur transfert vers l'application réceptrice (non représentée) du dispositif terminal destination 120.

De plus, le dispositif terminal source 110 comporte un planificateur (« scheduler » en anglais) 410 en charge de répartir les données contenues dans la file d'attente amont 441 entre les différents chemins de communication, en appliquant la règle (ou les règles) de répartition prédéfinie(s). Le planificateur applique ainsi typiquement des règles prédéfinies de balance de charge (« load balancing » en anglais) entre les différents chemins de communication, qui peuvent notamment prendre en compte des informations de longueur maximum de segment MSS (« Maximum Segment Size » en anglais) et/ou des informations les longueurs d'unité maximum de transmission MTU (« Maximum Transmission Unit » en anglais) négociées pour les connexions actives, et/ou qui peuvent prendre en compte des informations de latences de transmission via les connexions actives, et/ou qui peuvent prendre en compte des quantités de données déjà transmises et/ou des quantités de données en attente d'acquittement via les connexions actives. Les règles de répartition prédéfinies peuvent être telles qu'une ou plusieurs connexions actives ne sont pas forcément utilisées à tout moment. Cela peut notamment dépendre de la latence de transmission (donc du temps d'aller-retour) constatée via cette connexion active (ou ces connexions actives). Notamment, il peut y avoir des circonstances selon lesquelles, bien qu'une connexion vienne d'être rendue active sur un chemin, celle-ci n'est pas immédiatement pleinement utilisée par le dispositif terminal source 110 car la latence de transmission actuellement constatée via cette connexion active est supérieure à un seuil prédéfini. C'est le rôle du planificateur 410 de décider via quelle connexion active les données contenues dans la file d'attente amont 441 doivent être envoyées au dispositif terminal destination 120, et de décider si telle ou telle connexion active doit être effectivement utilisée à un moment donné. L'algorithme de la Fig. 3 assure cependant que chaque chemin dispose d'une connexion active, c'est-à-dire qui est effectivement utilisable pour transmettre au dispositif terminal destination 120 des données contenues dans la file d'attente amont 441.

D'une manière similaire, le dispositif terminal destination 120 comporte un assembleur 420 en charge de reconstruire la séquence de données à partir des données reçues via les différents chemins de communication, et de stocker la séquence de données reconstruite dans la file d'attente aval 442.

Par application de l'algorithme de la Fig. 3, une pluralité de connexions a été établie pour chacun des chemins de la communication multi-chemin entre le dispositif terminal source 110 et le dispositif terminal destination 120. Une file d'attente d'émission et une file d'attente de réception sont implémentées pour chacune des connexions établies. Ainsi : le dispositif terminal source 110 implémente une pluralité de files d'attente d'émission 41, et le dispositif terminal destination 120 implémente une pluralité de files d'attente de réception 44, pour les connexions respectives établies sur le chemin de communication 431 ; le dispositif terminal source 110 implémente une pluralité de files d'attente d'émission 42, et le dispositif terminal destination 120 implémente une pluralité de files d'attente de réception 45, pour les connexions respectives établies sur le chemin de communication 432 ; et, le dispositif terminal source 110 implémente une pluralité de files d'attente d'émission 43, et le dispositif terminal destination 120 implémente une pluralité de files d'attente de réception 46, pour les connexions respectives établies sur le chemin de communication 433. Etant donné qu'une unique connexion est active par chemin de communication, une unique file d'attente d'émission 411 est activée dans la pluralité de files d'attente d'émission 41, et une unique file d'attente de réception 424 est activée en correspondance dans la pluralité de files d'attente de réception 44 ; une unique file d'attente d'émission 412 est activée dans la pluralité de files d'attente d'émission 42, et une unique file d'attente de réception 425 est activée en correspondance dans la pluralité de files d'attente de réception 45 ; et, une unique file d'attente d'émission 413 est activée dans la pluralité de files d'attente d'émission 43, et une unique file d'attente de réception 426 est activée en correspondance dans la pluralité de files d'attente de réception 46.

Chacune des connexions qui ont été établies par application de l'algorithme de la Fig. 3 est indépendante des autres connexions ainsi établies. Chacune des connexions dispose alors de son propre mécanisme de contrôle de flux et de son propre mécanisme de contrôle de congestion, et est donc apte à permettre au dispositif terminal source 110 de détecter des incidents de transmission (comme des pertes de données) survenant dans le cadre de la communication multi-chemin avec le dispositif terminal destination 120, et de déterminer quelles connexions ont été respectivement concernées par lesdits incidents de transmission. Chacune des connexions actives dans le cadre de la communication multi-chemin depuis le dispositif terminal source 110 vers le dispositif terminal destination 120 est autonome.

Au sein des connexions actives, le dispositif terminal source 110 émet des octets de données selon un mécanisme de gestion de congestion reposant sur un protocole à fenêtre. Les octets sont numérotés grâce à des numéro de séquence et sont envoyés selon une fenêtre, dite fenêtre de congestion, d'une taille de w octets, ce qui signifie qu'au plus w octets peuvent être émis dans le cadre de la connexion en question sans attendre d'être acquittés. La taille w de la fenêtre de congestion est ajustée en fonction de l'évolution des conditions de transmission sur le chemin de communication sur lequel la connexion en question est établie, sans toutefois dépasser une valeur maximale autorisée *wmax*. Comme déjà mentionné, chacune des connexions actives dans le cadre de la communication multi-chemin depuis le dispositif terminal source 110 vers le dispositif terminal destination 120 est préférentiellement conforme au protocole TCP, et la gestion de la fenêtre de congestion est par exemple conforme à TCP Reno ou TCP CUBIC.

Des incidents de transmission peuvent survenir dans le cadre de chacune des connexions actives établies pour transmettre des données depuis le dispositif terminal source 110 vers le dispositif terminal destination 120. Comme détaillé ci-après, le dispositif terminal source 110 ferme une connexion active qui subit un incident de transmission afin d'annuler les mécanismes de retransmission qui vont s'enclencher sur cette connexion, et s'appuie alors sur une connexion qui avait été mise en réserve, pour rapidement fournir une alternative à la connexion qui a été ainsi fermée, afin de limiter, voire d'éviter, que ne surviennent des situations de blocage en tête de ligne.

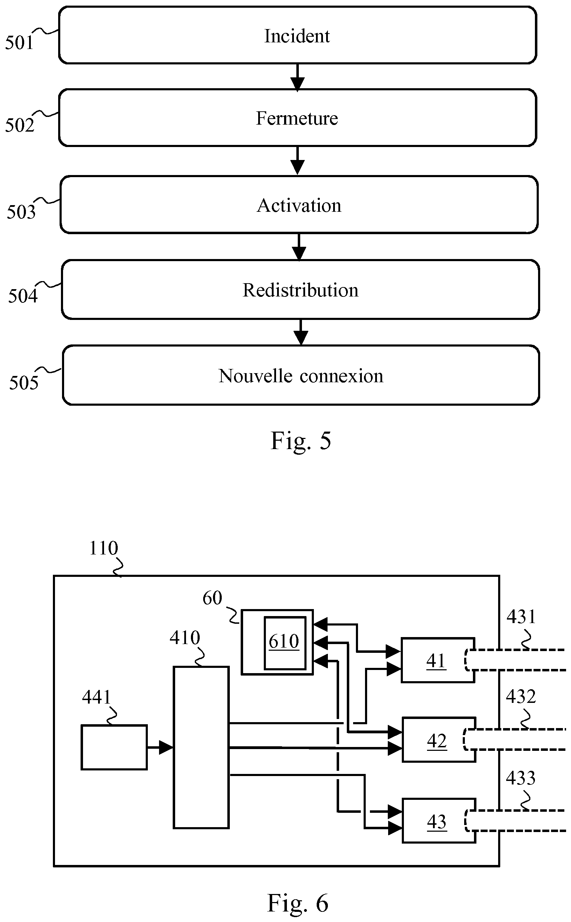

La **Fig. 5** illustre schématiquement un algorithme, implémenté par le dispositif terminal source 110, de gestion d'incident de transmission de données dans le cadre de la communication multi-chemin avec le dispositif terminal destination 120.

Dans une étape 501, le dispositif terminal source 110 détecte un incident de transmission survenant sur une connexion active de la communication multi-chemin avec le dispositif terminal destination 120. Un tel incident de transmission est par exemple : une perte de paquet de données, une expiration de temporisation associée à l'émission d'une donnée sans qu'un acquittement n'ait été reçu pour ladite donnée de la part du dispositif terminal destination 120, une réactivation d'un mécanisme de démarrage lent (« slow start » en anglais) du contrôle de congestion de ladite connexion, etc. Un démarrage lent est une technique connue de l'homme du métier consistant à initialiser une connexion avec une taille de fenêtre de congestion égale à une valeur minimale (par exemple égale à un segment), et la taille de la fenêtre est doublée à chaque temps d'aller-retour jusqu'à atteindre un seuil prédéterminé à partir duquel l'augmentation de la taille de fenêtre de congestion devient linéaire. On retrouve un tel mécanisme dans le protocole TCP par exemple.

Dans une étape 502 suivante, le dispositif terminal source 110 ferme la connexion active sur laquelle est survenu l'incident de transmission détecté à l'étape 501. Les données qui étaient présentes dans la file d'attente d'émission associée à ladite connexion et qui n'ont pas été acquittées par le dispositif terminal destination 120 sont conservées pour être préférentiellement redistribuées, selon au moins une règle de redistribution prédéterminée, entre les connexions actives de la communication multi-chemin. Pour cette redistribution de données, le dispositif terminal source 110 applique typiquement des règles prédéfinies de balance de charge entre les différents chemins de communication, qui peuvent notamment prendre en compte des informations de longueur maximum de segment MSS et/ou des informations les longueurs d'unité maximum de transmission MTU négociées pour les connexions actives, et/ou qui peuvent prendre en compte des informations de latences de transmission via les connexions actives.

Dans une étape 503 suivante, le dispositif terminal source 110 active une connexion qui avait été mise en réserve pour le chemin de communication sur lequel était établie la connexion qui a été fermée à l'étape 502. La connexion activée à l'étape 503 vient en remplacement de la connexion qui a été fermée à l'étape 502, et est ainsi utilisable pour répartir des données à transmettre au dispositif terminal destination 120. Le fait que cette connexion de remplacement soit effectivement ou pas utilisée, ou à quel moment cette connexion de remplacement soit effectivement utilisée, dépend des règles de répartition susmentionnées.

Fermer la connexion active et activer une connexion de réserve permet une réaction rapide à l'incident de transmission, e.g. perte de paquet en termes, sans avoir à effectuer de modification au niveau du comportement individuel de chaque connexion. Cela permet notamment d'utiliser des protocoles de connexion standard, tels que TCP, qui sont d'ores et déjà bien supportés par les équipements d'infrastructures réseau par lesquels passent les chemins de communication de la communication multi-chemin. Aucune modification des équipements d'infrastructures réseau déjà disponibles sur étagère n'est ainsi requise.

Dans un mode de réalisation particulier, le dispositif terminal source 110 implémentant un mécanisme de gestion de congestion reposant sur un protocole à fenêtre pour chaque connexion active, le dispositif terminal source 110 initialise la fenêtre de congestion de la connexion activée à l'étape 503 selon un mécanisme de démarrage lent, aussi connu sous l'appellation *algorithme à croissance exponentielle* (« exponential growth algorithm » en anglais), durant lequel la taille de ladite fenêtre de congestion est doublée à intervalles réguliers de durée égale au temps d'aller-retour (« round trip time » en anglais) via la connexion en question.

Selon une variante de réalisation, le dispositif terminal source 110 implémentant un mécanisme de gestion de congestion reposant sur un protocole à fenêtre pour chaque connexion active, le dispositif terminal source 110 initialise la taille de la fenêtre de congestion de la connexion activée à l'étape 503 à une valeur maximale autorisée pour ladite taille.

Selon une autre variante de réalisation, le dispositif terminal source 110 implémentant un mécanisme de gestion de congestion reposant sur un protocole à fenêtre pour chaque connexion active, le dispositif terminal source 110 initialise la taille de la fenêtre de congestion de la connexion activée à l'étape 503 à la valeur de taille de fenêtre de congestion que la connexion qui a été fermée à l'étape 502 avait avant la fermeture.

Dans une étape 504 suivante, le dispositif terminal source 110 redistribue entre les connexions actives les données qui étaient précédemment destinées à être transmises via la connexion qui a été fermée à l'étape 502 et qui n'ont pas été acquittées par le dispositif terminal destination 120 (en considérant notamment que les données qui n'ont pas encore été transmises n'ont, par définition, pas été acquittées par le dispositif terminal destination 120). La redistribution s'effectue selon au moins une règle de redistribution prédéterminée, comme déjà mentionné. Cette étape est effectuée par le planificateur 410 dans le cadre de la configuration qui a été présentée en relation avec la Fig. 4.

Préférentiellement, le dispositif terminal source 110 effectue un classement des connexions actives en fonction des latences moyennes de transmission que lesdites connexions actives impliquent respectivement, et le dispositif terminal source 110 redistribue lesdites données entre les connexions actives en fonction au moins dudit classement, en privilégiant les connexions impliquant les latences moyennes de transmission les plus faibles parmi lesdites connexions actives.

Dans un mode de réalisation particulier, le dispositif terminal source 110 effectue des regroupements de données en file d'attente d'émission en fonction d'une information de longueur maximum de segment MSS et/ou d'une information d'unité maximum de transmission MTU négociées entre le dispositif terminal source 110 et le dispositif terminal destination 120 pour la connexion à laquelle ladite file d'attente d'émission est associée. Le dispositif terminal source 110 retire de la file d'attente d'émission associée à la connexion qui a été fermée à l'étape 502 les données qui n'ont pas été acquittées par le dispositif terminal destination 120, et lorsque le dispositif terminal source 110 redistribue lesdites données entre les connexions actives, le dispositif terminal source 110 effectue de nouveaux regroupements de données en fonction d'une information de longueur maximum de segment MSS et/ou d'une information d'unité maximum de transmission MTU négociées entre le dispositif terminal source 110 et le dispositif terminal destination 120 pour au moins une connexion active vers laquelle la redistribution de données est opérée. Lorsque la longueur maximum de segment MSS et/ou l'unité maximum de transmission MTU qui ont négociées pour une connexion active vers laquelle la redistribution de données est opérée sont respectivement inférieures à la longueur maximum de segment MSS et/ou l'unité maximum de transmission MTU qui avaient été négociées pour la connexion fermée, alors de nouveaux regroupements sont ainsi effectués. En variante préférentielle, le dispositif terminal source 110 (et plus particulièrement le planificateur 410) effectue, préalablement au placement des données en file d'attente d'émission, des regroupements de données en unités de données de taille M inférieure à une valeur minimale des longueurs maximum de segment MSS négociées pour les chemins de la communication multi-chemin. Ainsi, les données sont transmises par unités de données de taille M sur les connexions actives, et on évite d'avoir à faire de nouveaux regroupements lors de la redistribution des données de la connexion fermée entre les connexions actives à la disposition du dispositif terminal source 110.

Dans un mode de réalisation particulier, en variante ou en complément du précédent, en reprenant l'illustration de la Fig. 4, le dispositif terminal source 110 retire de la file d'attente d'émission associée à la connexion qui a été fermée à l'étape 502 toutes les données contenues dans ladite file d'attente d'émission, à savoir les données en attente de transmission et celles en cours de transmission mais non encore acquittées. Le dispositif terminal source 110 identifie, pour chaque file d'attente d'émission associée à une connexion active, les données transmises mais non encore acquittées et les données en attente de transmission. Ainsi, lors de la redistribution des données qui étaient en file d'attente d'émission de la connexion où l'incident de transmission a été détecté, le dispositif terminal source 110 insère les données de la file d'attente d'émission de la connexion où l'incident de transmission a été détecté parmi les données non encore transmises de la file d'attente d'émission d'au moins une connexion active. Par exemple, le dispositif terminal source 110 détermine, pour chaque file d'attente d'émission associée à une connexion active, une frontière entre données transmises au dispositif terminal destination 120 mais non acquittées et données non encore transmises au dispositif terminal destination 120. Le dispositif terminal source 110 insère alors, à ladite frontière d'au moins une file d'attente d'émission associée à une connexion active, au moins une partie des données qui ont été retirées de la file d'attente d'émission associée à la connexion qui a été fermée à l'étape 502, de telle sorte que l'ensemble des données retirées de la file d'attente d'émission associée à la connexion qui a été fermée à l'étape 502 soit ainsi redistribuées. Dans ce mode de réalisation particulier, il peut être nécessaire de réviser des numéros de séquence qui ont d'ores et déjà été attribués par le dispositif terminal source 110 aux données en attente de transmission dans laquelle sont insérées les données qui ont été retirées de la file d'attente d'émission associée à la connexion qui a été fermée à l'étape 502. Les numéros de séquence qui auraient été attribués par le dispositif terminal source 110 dans le cadre de la connexion qui a été fermée sont remplacés par des numéros de séquence correspondant à la place à laquelle lesdites données sont insérées dans la file d'attente d'émission de la connexion active vers laquelle la redistribution de données est effectuées, les numéros de séquence des données qui étaient alors déjà présentes dans ladite file d'attente d'émission étant alors augmentés d'autant.

Pour éviter d'avoir à réviser les numéros de séquence au sein des files d'attentes d'émission dans lesquelles sont insérées les données qui ont été extraites de la file d'attente d'émission de la connexion qui a été fermée à l'étape 502, le dispositif terminal source 110 peut utiliser pour transmettre lesdites données une connexion de substitution qui avait été mise en réserve sur un autre chemin. Ladite connexion de substitution n'est alors pas considérée comme active par le planificateur 410 pour l'application des règles de répartition susmentionnées, mais sert juste de manière temporaire pour vider la file d'attente d'émission de la connexion qui a été fermée à l'étape 502. Dans un mode de réalisation particulier, lorsque les données qui ont été extraites de la file d'attente d'émission de la connexion qui a été fermée à l'étape 502 ont finalement été transmises via la connexion de substitution, ladite connexion de substitution est fermée et une nouvelle connexion est établie pour être mise en réserve.

Dans un autre mode de réalisation particulier, en reprenant l'illustration de la Fig. 4, le dispositif terminal source 110 retire de la file d'attente d'émission associée à la connexion qui a été fermée à l'étape 502 toutes les données contenues dans ladite file d'attente d'émission, à savoir les données en attente de transmission et celles en cours de transmission mais non encore acquittées. Le dispositif terminal source 110 insère alors lesdites données en tête de la mémoire tampon 441, afin que le planificateur 410 redistribue lesdites données entre les connexions actives, en appliquant les règles de répartition susmentionnées.

Encore un autre mode de réalisation particulier est détaillé ci-après en relation avec la Fig. 6.

Dans une étape 505 suivante, le dispositif terminal source 110 établit préférentiellement une nouvelle connexion avec le dispositif terminal source via le chemin de communication sur lequel était établie la connexion qui a été fermée à l'étape 502. Le dispositif terminal source 110 met en réserve la connexion établie à l'étape 505, de sorte à ce que la quantité de connexions établies pour le chemin de communication en question soit le même qu'avant la fermeture de connexion effectuée à l'étape 503. Il est aussi possible de choisir de ne pas disposer d'une quantité constante de connexions établies pour chaque chemin de communication.

Comme déjà évoqué, il peut y avoir des circonstances selon lesquelles, bien qu'une connexion vienne d'être rendue active sur un chemin, celle-ci n'est pas immédiatement pleinement utilisable par le dispositif terminal source 110, sous peine de créer un nouvel incident de transmission. Un mode de réalisation particulier consiste alors en ce que le dispositif terminal source 110 implémente une phase de test vis-à-vis de la connexion qui avait été mise en réserve et qui est devenue active suite à un incident de transmission. Dans cette phase de test, le dispositif terminal source 110 transmet des données à la fois via la connexion en question et via au moins une autre connexion active (donc sur au moins un autre chemin respectif) de sorte à créer de la redondance de données, et ce, jusqu'à ce que ladite connexion en question montre une latence de transmission inférieure à un seuil prédéfini.

La **Fig. 6** illustre schématiquement une configuration du dispositif terminal source 110, dans un mode de réalisation particulier d'implémentation de l'invention.

La configuration de la Fig. 6 reprend de manière simplifiée la configuration du dispositif terminal source 110 telle que déjà présentée en relation avec la Fig. 4. Y apparaissent le planificateur 410 et la file d'attente amont 441. Y apparaissent aussi la pluralité de files d'attente d'émission 41, la pluralité de files d'attente 42, et la pluralité de files d'attente de réception 43, respectivement établies sur les chemins de communication 431, 432, 433. La configuration de la Fig. 6 fait aussi apparaître un gestionnaire d'incident 60 en charge d'effectuer les opérations décrites ci-après d'extraction de données et de redistribution des données extraites. La configuration de la Fig. 6 fait aussi apparaître que le gestionnaire d'incident 60 dispose d'une mémoire tampon (« buffer » en anglais) de délestage 610.

Grâce à un tel agencement, lorsqu'un incident de transmission survient sur une connexion établie dans le cadre de la communication multi-chemin, le dispositif terminal source 110 retire de la file d'attente d'émission associée à ladite connexion (qui a été fermée à l'étape 502) toutes les données contenues dans ladite file d'attente d'émission, à savoir les données en attente de transmission et celles en cours de transmission mais non encore acquittées. Le dispositif terminal source 110 stocke alors ces données dans la mémoire tampon de délestage 610. Pour redistribuer les données stockées dans la mémoire tampon de délestage 610, le dispositif terminal source 110 sélectionne au moins une connexion active parmi la pluralité de connexions actives dont dispose le dispositif terminal source 110, et le dispositif terminal source 110 procède à la fermeture de chaque connexion active ainsi sélectionnée, lorsque la file d'attente d'émission associée à ladite connexion active n'est pas vide. Le dispositif terminal source 110 retire de la file d'attente d'émission associée à chaque connexion ainsi fermée toutes les données contenues dans ladite file d'attente d'émission, à savoir les données en attente de transmission et celles en cours de transmission mais non encore acquittées. Le dispositif terminal source 110 place alors les données ainsi extraites dans la mémoire tampon de délestage 610, en vue de leur redistribution. De plus, le dispositif terminal source 110 rend active une connexion qui avait été mise en réserve sur chaque chemin pour lequel une connexion active a été ainsi fermée. Le dispositif terminal source 110 dispose alors, pour au moins un sous-ensemble des chemins de la communication multi-chemin, de connexions actives dont les files d'attente d'émission associées sont vides. Le dispositif terminal source 110 redistribue alors les données stockées dans la mémoire tampon de délestage 610 parmi ces connexions actives dont les files d'attente d'émission associées sont vides. Cette approche permet d'éviter d'avoir à réviser les numéros de séquence au sein des files d'attentes d'émission dans lesquelles sont insérées les données qui ont été extraites de la file d'attente d'émission de la connexion où l'incident de transmission a été détecté.

**Revendications**

1. Procédé de transmission de données dans le cadre d'une communication multi-chemin depuis un équipement terminal source (110) vers un équipement terminal destination (120), **caractérisé en ce que** le procédé comporte les étapes suivantes :

    - établir (304), sur au moins un chemin de la communication multi-chemin, une pluralité de connexions depuis l'équipement terminal source vers l'équipement terminal destination ;
    - pour chaque chemin sur lequel une dite pluralité de connexions a été établie, sélectionner (305) pour la rendre active au moins une connexion parmi la pluralité de connexions établies, les autres connexions établies étant mises en réserve ; et
    - répartir les données entre les connexions sélectionnées, dites connexions actives, selon au moins une règle de répartition prédéfinie et transmettre les données réparties ;

    et, sur détection (501) d'un incident de transmission via une connexion active sur un chemin sur lequel une dite pluralité de connexions a été établie :

    - fermer (502) ladite connexion active ; et
    - rendre active (503) une connexion qui avait été mise en réserve sur ledit chemin.

2. Procédé selon la revendication 1, **caractérisé en ce qu'**une pluralité de connexions est établie (304) depuis l'équipement terminal source vers l'équipement terminal destination pour chaque chemin de la communication multi-chemin.

3. Procédé selon l'une des revendications 1 et 2, **caractérisé en ce qu'**après avoir établi chaque dite pluralité de connexions, une unique connexion est sélectionnée (305) pour la rendre active pour chaque chemin sur lequel une dite pluralité de connexions a été établie.

4. Procédé selon la revendication 3, **caractérisé en ce**

**que**, le procédé implémentant un mécanisme de gestion de congestion reposant sur un protocole à fenêtre de congestion pour chaque connexion active, le procédé initialise la fenêtre de congestion de la connexion, qui a été rendue active suite à l'incident de transmission, à une valeur maximale de taille autorisée.

5. Procédé selon la revendication 3, **caractérisé en ce que**, le procédé implémentant un mécanisme de gestion de congestion reposant sur un protocole à fenêtre de congestion pour chaque connexion active, le procédé initialise la fenêtre de congestion de la connexion, qui a été rendue active suite à l'incident de transmission, à une valeur de taille égale à une valeur de taille que la fenêtre de congestion de la connexion où l'incident a été détecté avait avant d'être fermée.

6. Procédé selon l'une quelconque des revendications 3 à 5, **caractérisé en ce que**, après avoir fermé (502) la connexion où l'incident a été détecté, le procédé établit (505) une nouvelle connexion sur le chemin sur lequel avait été établie la connexion fermée, la nouvelle connexion étant mise en réserve.

7. Procédé selon l'une quelconque des revendications 1 à 6, **caractérisé en ce que** le procédé établit (304), pour chaque dite pluralité de connexions, une quantité Q de connexions telle que :

$$Q = \left\lceil 1 + \frac{\max(t_1, t_2)}{RTT} \right\rceil$$

où $\lceil x \rceil$ représente la partie entière par excès de $x$, $t_1$ représente un temps nécessaire pour établir une connexion depuis l'équipement terminal source vers l'équipement terminal destination, $t_2$ représente un temps nécessaire pour fermer une connexion depuis l'équipement terminal source vers l'équipement terminal destination, et $RTT$ représente un temps moyen d'aller-retour le long du chemin sur lequel ladite pluralité de connexions a été établie.

8. Procédé selon l'une quelconque des revendications 1 à 7, **caractérisé en ce que** le procédé extrait des données présentes dans une file d'attente d'émission associée à la connexion où l'incident a été détecté, et redistribue (504) les données extraites entre les connexions actives de la communication multi-chemin selon au moins une règle de redistribution prédéterminée.

9. Procédé selon la revendication 8, **caractérisé en ce que** le procédé comprend un classement des connexions actives en fonction de latences moyennes de transmission que lesdites connexions actives impliquent respectivement depuis l'équipement terminal source jusqu'au dispositif terminal destination, et redistribue (504) lesdites données entre les connexions actives au moins en fonction dudit classement.

10. Procédé selon l'une quelconque des revendications 8 et 9, **caractérisé en ce que** la redistribution comprend, pour au moins une file d'attente d'émission associée à une connexion active:

- identifier, parmi les données de ladite file d'attente, les données transmises au dispositif terminal destination mais non acquittées et les données en attente de transmission au dispositif terminal destination ; et
- insérer les données à redistribuer, parmi lesdites données en attente de transmission.

11. Procédé selon l'une quelconque des revendications 8 et 9, **caractérisé en ce que** le procédé place les données extraites dans une mémoire tampon de délestage (610), **en ce que** le procédé comporte les étapes suivantes :

- sélectionner au moins une connexion active pour redistribuer les données stockées dans la mémoire tampon de délestage ;
- fermer chaque connexion active sélectionnée ;
- rendre active une connexion qui avait été mise en réserve sur chaque chemin pour lequel une connexion active sélectionnée a été fermée ; et
- extraire des données présentes dans une file d'attente d'émission associée à chaque connexion active sélectionnée qui a été fermée, et les placer dans la mémoire tampon de délestage, en vue de leur redistribution.

12. Procédé selon l'une quelconque des revendications 1 à 7, **caractérisé en ce que** le procédé extrait des données présentes dans une file d'attente d'émission associée à la connexion où l'incident a été détecté, et utilise pour transmettre lesdites données une connexion de substitution qui avait été mise en réserve sur un autre chemin que celui où avait été établie la connexion où l'incident a été détecté.

13. Procédé selon l'une quelconque des revendications 1 à 12, **caractérisé en ce que**, lorsque la connexion qui avait été mise en réserve est rendue active suite à l'incident de transmission, le procédé effectue une phase de test vis-à-vis de ladite connexion, dans laquelle le procédé transmet des données à la fois via ladite connexion et via au moins une autre connexion active de sorte à créer de la redondance de données, et ce, jusqu'à ce que ladite connexion rendue active montre une latence de transmission inférieure à un seuil prédéfini.

14. Produit programme d'ordinateur comportant des instructions pour mettre en œuvre le procédé selon l'une quelconque des revendications 1 à 13, lorsque lesdites instructions sont exécutées par un processeur.

15. Equipement configuré pour permettre à un équipement terminal source d'effectuer une transmission de données dans le cadre d'une communication multi-chemin depuis l'équipement terminal source (110) vers un équipement terminal destination (120), **caractérisé en ce que** ledit équipement comporte une machine de calcul configurée pour :

- établir (304), sur au moins un chemin de la communication multi-chemin, une pluralité de connexions avec l'équipement terminal destination ;
- pour chaque chemin sur lequel une dite pluralité de connexions a été établie, sélectionner (305) pour la rendre active au moins une connexion parmi la pluralité de connexions établies, les autres connexions établies étant mises en réserve ; et
- répartir les données entre les connexions sélectionnées, dites connexions actives, selon au moins une règle de répartition prédéfinie et transmettre les données réparties ;

et, sur détection (501) d'un incident de transmission via une connexion active sur un chemin sur lequel une dite pluralité de connexions a été établie :

- fermer (502) ladite connexion active ; et
- rendre active (503) une connexion qui avait été mise en réserve sur ledit chemin.

**Patentansprüche**

1. Verfahren zur Übertragung von Daten im Rahmen einer Mehrwegkommunikation von einer Quellen-Endeinrichtung (110) zu einer Ziel-Endeinrichtung (120), **dadurch gekennzeichnet, dass** das Verfahren die folgenden Schritte umfasst:

- Aufbauen (304), auf mindestens einem Weg der Mehrwegkommunikation, einer Vielzahl von Verbindungen von der Quellen-Endeinrichtung zur Ziel-Endeinrichtung;
- Auswählen (305), für jeden Weg, auf dem eine Vielzahl von Verbindungen aufgebaut wurde, mindestens einer Verbindung unter der Vielzahl von aufgebauten Verbindungen, um sie zu aktivieren, wobei die übrigen aufgebauten Verbindungen in Reserve gestellt werden; und
- Aufteilen der Daten auf die ausgewählten Verbindungen, aktive Verbindungen genannt, nach mindestens einer vorgegebenen Aufteilungsregel und Übertragen der aufgeteilten Daten;

und, beim Erkennen (501) einer Übertragungsstörung über eine aktive Verbindung auf einem Weg, auf dem eine Vielzahl von Verbindungen aufgebaut wurde:

  - Beenden (502) der aktiven Verbindung; und
  - Aktivieren (503) einer Verbindung, die auf dem Weg in Reserve gestellt wurde.

2. Verfahren nach Anspruch 1, **dadurch gekennzeichnet, dass** eine Vielzahl von Verbindungen von der Quellen-Endeinrichtung zur Ziel-Endeinrichtung für jeden Weg der Mehrwegkommunikation aufgebaut (304) wird.

3. Verfahren nach einem der Ansprüche 1 und 2, **dadurch gekennzeichnet, dass** nach dem Aufbauen jeder Vielzahl von Verbindungen für jeden Weg, auf dem eine Vielzahl von Verbindungen aufgebaut wurde, eine einzige Verbindung ausgewählt (305) wird, um sie zu aktivieren.

4. Verfahren nach Anspruch 3, **dadurch gekennzeichnet, dass**, wenn das Verfahren einen Stauverwaltungsmechanismus, der auf einem Staufensterprotokoll beruht, für jede aktive Verbindung implementiert, das Verfahren das Staufenster der Verbindung, die infolge der Übertragungsstörung aktiviert wurde, mit einem höchstzulässigen Größenwert initialisiert.

5. Verfahren nach Anspruch 3, **dadurch gekennzeichnet, dass**, wenn das Verfahren einen Stauverwaltungsmechanismus, der auf einem Staufensterprotokoll beruht, für jede aktive Verbindung implementiert, das Verfahren das Staufenster der Verbindung, die infolge der Übertragungsstörung aktiviert wurde, mit einem Größenwert initialisiert, der gleich einem Größenwert ist, den das Staufenster der Verbindung, auf der die Störung erkannt worden ist, hatte, bevor sie beendet wurde.

6. Verfahren nach einem der Ansprüche 3 bis 5, **dadurch gekennzeichnet, dass** das Verfahren, nachdem die Verbindung, auf der die Störung erkannt worden ist, beendet (502) wurde, eine neue Verbindung auf dem Weg aufbaut (505), auf dem die beendete Verbindung aufgebaut worden war, wobei die neue Verbindung in Reserve gestellt wird.

7. Verfahren nach einem der Ansprüche 1 bis 6, **dadurch gekennzeichnet, dass** das Verfahren für jede Vielzahl von Verbindungen eine Menge Q von Verbindungen aufbaut (304), so dass:

$$Q = 1 + \left\lceil \frac{\max(t_1, t_2)}{RTT} \right\rceil$$

worin ⌈x⌉ die kleinste ganze Zahl größer oder gleich x ist, $t_1$ die erforderliche Zeit zum Aufbauen einer Verbindung von der Quellen-Endeinrichtung zur Ziel-Endeinrichtung ist, $t_2$ die erforderliche Zeit zum Beenden einer Verbindung von der Quellen-Endeinrichtung zur Ziel-Endeinrichtung ist und *RTT* die mittlere Umlaufzeit entlang des Weges ist, auf dem die Vielzahl von Verbindungen aufgebaut worden ist.

8. Verfahren nach einem der Ansprüche 1 bis 7, **dadurch gekennzeichnet, dass** das Verfahren Daten extrahiert, die sich in einer Sendewarteschleife befinden, die der Verbindung zugeordnet ist, auf der die Störung erkannt worden ist, und die extrahierten Daten (504) nach mindestens einer vorbestimmten Neuaufteilungsregel neu auf die aktiven Verbindungen der Mehrwegkommunikation aufteilt.

9. Verfahren nach Anspruch 8, **dadurch gekennzeichnet, dass** das Verfahren eine Einstufung der aktiven Verbindungen in Abhängigkeit von Übertragungslatenzzeiten umfasst, welche die aktiven Verbindungen jeweils von der Quellen-Endeinrichtung bis zur Ziel-Endeinrichtung beinhalten, und die Daten mindestens in Abhängigkeit von der Einstufung neu auf die aktiven Verbindungen aufteilt (504).

10. Verfahren nach einem der Ansprüche 8 und 9, **dadurch gekennzeichnet, dass** die Neuaufteilung für mindestens eine Sendewarteschlange, die einer aktiven Verbindung zugeordnet ist, umfasst:

  - Ermitteln der Daten unter den Daten der Warteschlange, die an die Ziel-Endeinrichtung übertragen wurden, aber noch nicht quittiert wurden, und der auf die Übertragung an die Ziel-Endeinrichtung wartenden Daten; und
  - Einfügen der neu aufzuteilenden Daten unter den auf die Übertragung wartenden Daten.

11. Verfahren nach einem der Ansprüche 8 und 9, **dadurch gekennzeichnet, dass** das Verfahren die extrahierten Daten in einem Entlastungspufferspeicher (610) ablegt, dass das Verfahren die folgenden Schritte umfasst:

  - Auswählen mindestens einer aktiven Verbindung, um die im Entlastungspufferspeicher gespeicherten Daten neu aufzuteilen;
  - Beenden jeder ausgewählten aktiven Verbindung;
  - Aktivieren einer Verbindung, die in Reserve gestellt worden war, auf jedem Weg, für den eine ausgewählte aktive Verbindung beendet worden ist; und

- Extrahieren der Daten, die sich in einer Sendewarteschleife befinden, die jeder ausgewählten aktiven Verbindung zugeordnet ist, die beendet worden ist, und Ablegen dieser Daten in einen Entlastungspufferspeicher im Hinblick auf ihre Neuaufteilung.

12. Verfahren nach einem der Ansprüche 1 bis 7, **dadurch gekennzeichnet, dass** das Verfahren Daten extrahiert, die sich in einer Sendewarteschleife befinden, die der Verbindung zugeordnet ist, auf der die Störung erkannt worden ist, und zum Übertragen dieser Daten eine Ersatzverbindung verwendet, die auf einem anderen Weg als dem, auf dem die Verbindung aufgebaut worden war, auf der die Störung festgestellt worden ist, in Reserve gestellt worden war.

13. Verfahren nach einem der Ansprüche 1 bis 12, **dadurch gekennzeichnet, dass**, wenn die Verbindung, die in Reserve gestellt worden war, infolge der Übertragungsstörung aktiviert wird, das Verfahren eine Testphase für diese Verbindung durchführt, bei der das Verfahren Daten sowohl über diese Verbindung als auch über mindestens eine andere aktive Verbindung überträgt, so dass Datenredundanz geschaffen wird, und dies, bis die aktivierte Verbindung eine Übertragungslatenzzeit zeigt, die unter einem vorgegebenen Schwellenwert liegt.

14. Computerprogrammprodukt, das Befehle umfasst, die bei der Ausführung der Befehle durch einen Prozessor das Verfahren nach einem der Ansprüche 1 bis 13 ausführen.

15. Einrichtung, die dazu konfiguriert ist, einer Quellen-Endeinrichtung zu ermöglichen, eine Datenübertragung im Rahmen einer Mehrwegkommunikation von der Quellen-Endeinrichtung (110) zu einer Ziel-Endeinrichtung (120) vorzunehmen, **dadurch gekennzeichnet, dass** die Einrichtung eine Rechenmaschine umfasst, die dazu konfiguriert ist:

- auf mindestens einem Weg der Mehrwegkommunikation eine Vielzahl von Verbindungen zur Ziel-Endeinrichtung aufzubauen (304);
- für jeden Weg, auf dem eine Vielzahl von Verbindungen aufgebaut worden ist, mindestens eine Verbindung unter der Vielzahl von aufgebauten Verbindungen auszuwählen (305), um sie zu aktivieren, wobei die übrigen aufgebauten Verbindungen in Reserve gestellt werden; und
- die Daten auf die ausgewählten Verbindungen, aktive Verbindungen genannt, nach mindestens einer vorgegebenen Aufteilungsregel aufzuteilen und die aufgeteilten Daten zu übertragen;

und, beim Erkennen (501) einer Übertragungsstörung über eine aktive Verbindung auf einem Weg, auf dem eine Vielzahl von Verbindungen aufgebaut wurde:

- die aktive Verbindung zu beenden (502); und
- eine Verbindung, die auf dem Weg in Reserve gestellt worden war, zu aktivieren (503).

## Claims

1. A method for transmitting data in the context of a multipath communication from source terminal equipment (110) to destination terminal equipment (120), **characterised in that** the method comprises the following steps:

- establishing (304), on at least one path of the multipath communication, a plurality of connections from the source terminal equipment to the destination terminal equipment;
- for each path on which a plurality of connections has been established, selecting (305) to make it active at least one connection among said plurality of established connections, the other established connections being put in reserve; and
- distributing the data between the selected connections, referred to as active connections, according to at least one predefined distribution rule, and transmitting the distributed data;

and, upon detecting (501) a transmission incident via an active connection on a path on which one said plurality of connections has been established:

- closing (502) said active connection; and
- making active (503) a connection that had been put in reserve on said path.

2. The method according to claim 1, **characterised in that** a plurality of connections is established (304) from the source terminal equipment to the destination terminal equipment for each path in the multipath communication.

3. The method according to one of claims 1 and 2, **characterised in that**, after having established each said plurality of connections, a single connection is selected (305) to make it active for each path on which one said plurality of connections has been established.

4. The method according to claim 3, **characterised in that**, the method implementing a congestion management mechanism based on a congestion window protocol for each active connection, the method initialises the congestion window of the connection that was made active following the transmission incident, to a maximum allowable size value.

5. The method according to claim 3, **characterised in that**, the method implementing a congestion management mechanism based on a congestion window protocol for each active connection, the method initialises the congestion window of the connection that was made active following the transmission incident, to a size value equal to a size value that the congestion window of the connection where the incident was detected had before being closed.

6. The method according to any one of claims 3 to 5, **characterised in that**, after having closed (502) the connection where the incident was detected, the method establishes (505) a new connection on the path on which the closed connection had been established, the new connection being put in reserve.

7. The method according to any one of claims 1 to 6, **characterised in that** the method establishes, for each said plurality of connections, a quantity Q of connections such that:

$$Q = \left\lceil 1 + \frac{\max(t_1, t_2)}{RTT} \right\rceil$$

where [x] represents the ceiling integer part of x, $t_1$ represents a time necessary for establishing a connection from the source terminal equipment to the destination terminal equipment, $t_2$ represents a time necessary for closing a connection from the source terminal equipment to the destination terminal equipment, and RTT represents a mean round-trip time along the path on which said plurality of connections was established.

8. The method according to any one of claims 1 to 7, **characterised in that** the method extracts data present in a sending queue associated with the connection where the incident was detected, and redistributes (504) the extracted data between the active connections of the multipath communication according to at least one predetermined redistribution rule.

9. The method according to claim 8, **characterised in that** the method comprises a classification of the active connections according to mean transmission latencies that said active connections involve respectively from the source terminal equipment to the destination terminal device, and redistributes (504) said data between the active connections at least according to said classification.

10. The method according to any one of claims 8 and 9, **characterised in that** the redistribution comprises, for at least one sending queue associated with an active connection:

- identifying, among the data of said queue, the data transmitted to the destination terminal device but not acknowledged and the data awaiting transmission to the destination terminal device; and
- inserting the data to be redistributed, among said data awaiting transmission.

11. The method according to any one of claims 8 and 9, **characterised in that** the method places the extracted data in an offloading buffer (610), **in that** the method further comprises the following steps:

- selecting at least one active connection for redistributing the data stored in the offloading buffer;
- closing each selected active connection;
- making active a connection that had been put in reserve on each path for which a selected active connection was closed; and
- extracting data present in a sending queue associated with each selected active connection that was closed, and placing them in the offloading buffer, with a view to redistribution thereof.

12. The method according to any one of claims 1 to 7, **characterised in that** the method extracts data present in a sending queue associated with the connection where the incident was detected, and uses, for transmitting said data, a substitute connection that had been put in reserve on a path other than the one where the connection where the incident was detected had been established.

13. The method according to any one of claims 1 to 12, **characterised in that**, when the connection that had been put in reserve is made active following the transmission incident, the method implements a test phase vis-à-vis said connection, in which the method transmits data both via said connection and via at least one other active connection so as to create data redundancy, until said connection made active shows a transmission latency below a predefined threshold.

14. A computer program product comprising instructions for implementing the method according to any one of claims 1 to 13, when said instructions are executed by a processor.

15. Equipment configured to enable source terminal equipment to transmit data in the context of a multipath communication from the source terminal equipment (110) to destination terminal equipment (120), **characterised in that** said equipment comprises a computing machine configured to:

- establish (304), on at least one path of the multipath communication, a plurality of connections with the destination terminal equipment;
- for each path on which a said plurality of connections was established, select (305) to make it active at least one connection among the plurality of established connections, the other established connections being put in reserve; and
- distribute the data between the selected connections, referred to as active connections, according to at least one predefined distribution rule, and transmit the distributed data;

and, upon detecting (501) a transmission incident via an active connection on a path on which a said plurality of connections was established:

- close (502) said active connection; and
- make active (503) a connection that had been put in reserve on said path.

Fig. 1A

Fig. 1B

Fig. 1C

Fig. 2

301 — Besoin / opportunité

302 — Identification

303 — Sélection

304 — Pluralité de connexions

305 — Activation et mise en réserve

**oui** — 306 — Autre ? — **non** — 307 — Fin

Fig. 3

110      120

441    410    41    431    44    420    442

411    424

42    432    45

412    425

43    433    46

413    426

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013286942 A1
- US 2015156659 A
- US 2105127843 A1
- US 2013064198 A1